# EUROPEAN PATENT SPECIFICATION

(11) **EP 2 976 803 B1**
(45) Date of publication and mention of the grant of the patent: **09.08.2017**
(21) Application number: 14708436.2
(22) Date of filing: 20.02.2014
(51) Int. Cl.: B60L 1/00, B60L 1/08, H01M 12/08, H01M 10/42, B60L 11/18, H01M 4/38

(54) **METAL/OXYGEN BATTERY WITH OXYGEN PRESSURE MANAGEMENT**
METALL/SAUERSTOFFBATTERIE MIT SAUERSTOFFDRUCKSTEUERUNG
BATTERIE MÉTAL-OXYGÈNE À GESTION DE LA PRESSION D'OXYGÈNE

(30) Priority: 21.02.2013 US 201361767617 P
(43) Date of publication of application: 27.01.2016
(73) Proprietor: Robert Bosch GmbH, 70442 Stuttgart (DE)
(72) Inventor: ALBERTUS, Paul, Washington, DC 20012 (US); CHRISTENSEN, John, Mountain View 94043 (US); LOHMANN, Timm, Mountain View 94043 (US); KOZINSKY, Boris, Waban, MA 02468 (US)
(74) Representative: Bee, Joachim
(86) International application number: PCT/US2014/017462
(87) International publication number: WO 2014/130711

(56) References cited:
- US-A1- 2005 095 488
- US-A1- 2012 041 628

## Description

### Field

This disclosure relates to batteries and more particularly to metal/oxygen based batteries.

### Background

Rechargeable lithium-ion batteries are attractive energy storage systems for portable electronics and electric and hybrid-electric vehicles because of their high specific energy compared to other electrochemical energy storage devices. As discussed more fully below, a typical Li-ion cell contains a negative electrode, a positive electrode, and a separator region between the negative and positive electrodes. Both electrodes contain active materials that insert or react with lithium reversibly. In some cases the negative electrode may include lithium metal, which can be electrochemically dissolved and deposited reversibly. The separator contains an electrolyte with a lithium cation, and serves as a physical barrier between the electrodes such that none of the electrodes are electronically connected within the cell.

Typically, during charging, there is generation of electrons at the positive electrode and consumption of an equal amount of electrons at the negative electrode, and these electrons are transferred via an external circuit. In the ideal charging of the cell, these electrons are generated at the positive electrode because there is extraction via oxidation of lithium ions from the active material of the positive electrode, and the electrons are consumed at the negative electrode because there is reduction of lithium ions into the active material of the negative electrode. During discharging, the exact opposite reactions occur.

When high-specific-capacity negative electrodes such as a metal are used in a battery, the maximum benefit of the capacity increase over conventional systems is realized when a high-capacity positive electrode active material is also used. For example, conventional lithium-intercalating oxides (e.g., LiCoO₂, LiNi_{0.8}Co_{0.15}Al_{0.05}O₂, Li_{1.1}Ni_{0.3}Co_{0.3}Mn_{0.3}O₂) are typically limited to a theoretical capacity of ∼280 mAh/g (based on the mass of the lithiated oxide) and a practical capacity of 180 to 250 mAh/g, which is quite low compared to the specific capacity of lithium metal, 3863 mAh/g. The highest theoretical capacity achievable for a lithium-ion positive electrode is 1794 mAh/g (based on the mass of the lithiated material), for Li₂O. Other high-capacity materials include BiF₃ (303 mAh/g, lithiated), FeF₃ (712 mAh/g, lithiated), Zn, Al, Si, Mg, Na, Fe, Ca, and others. In addition, other negative-electrode materials, such as alloys of multiple metals and materials such as metal-hydrides, also have a high specific energy when reacted with oxygen. Many of these couples also have a very high energy density

Unfortunately, all of these materials react with lithium at a lower voltage compared to conventional oxide positive electrodes, hence limiting the theoretical specific energy. Nonetheless, the theoretical specific energies are still very high (> 800 Wh/kg, compared to a maximum of ∼500 Wh/kg for a cell with lithium negative and conventional oxide positive electrodes, which may enable an electric vehicle to approach a range of 300 miles or more on a single charge.

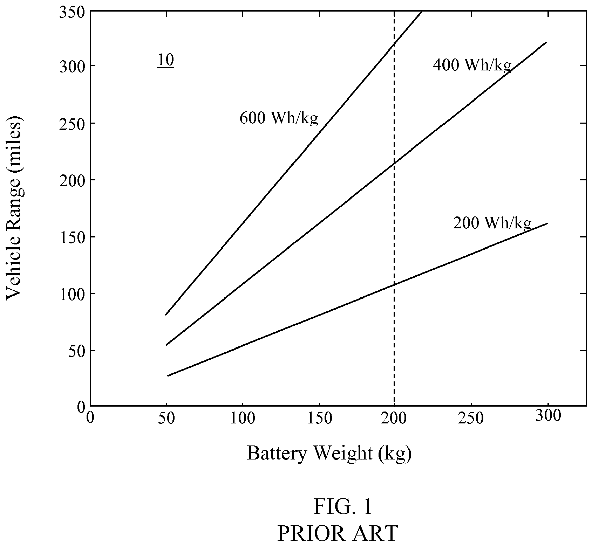

FIG. 1 depicts a chart 10 showing the range achievable for a vehicle using battery packs of different specific energies versus the weight of the battery pack. In the chart 10, the specific energies are for an entire cell, including cell packaging weight, assuming a 50% weight increase for forming a battery pack from a particular set of cells. The U.S. Department of Energy has established a weight limit of 200 kg for a battery pack that is located within a vehicle. Accordingly, only a battery pack with about 600 Wh/kg or more can achieve a range of 300 miles.

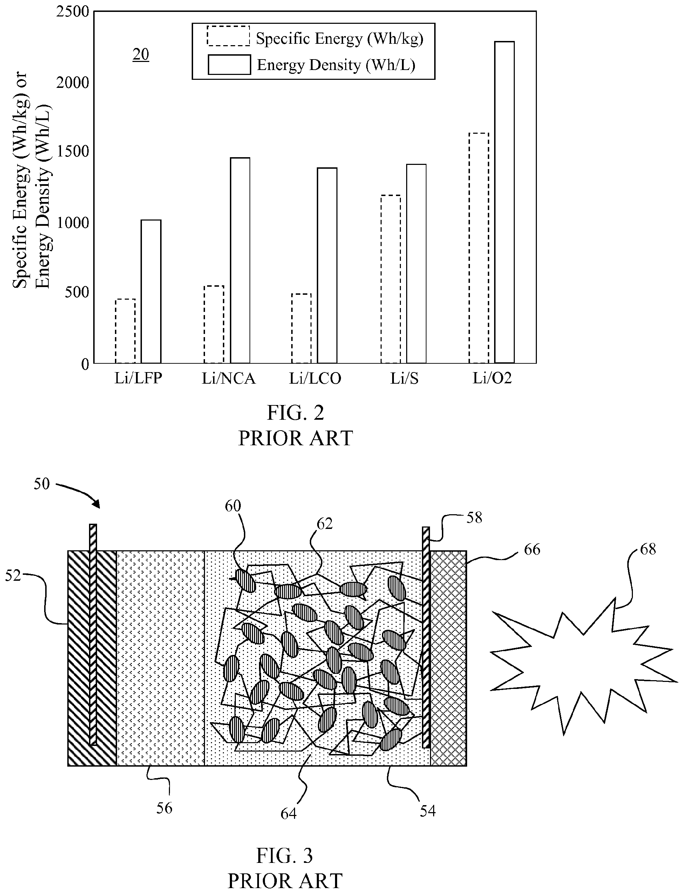

Various lithium-based chemistries have been investigated for use in various applications including in vehicles. FIG. 2 depicts a chart 20 which identifies the specific energy and energy density of various lithium-based chemistries. In the chart 20, only the weight of the active materials, current collectors, binders, separator, and other inert material of the battery cells are included. The packaging weight, such as tabs, the cell can, etc., are not included. As is evident from the chart 20, lithium/oxygen batteries, even allowing for packaging weight, are capable of providing a specific energy >600 Wh/kg and thus have the potential to enable driving ranges of electric vehicles of more than 300 miles without recharging, at a similar cost to typical lithium ion batteries. While lithium/oxygen cells have been demonstrated in controlled laboratory environments, a number of issues remain before full commercial introduction of a lithium/oxygen cell is viable as discussed further below.

A typical lithium/oxygen electrochemical cell 50 is depicted in FIG. 3. The cell 50 includes a negative electrode 52, a positive electrode 54, a porous separator 56, and a current collector 58. The negative electrode 52 is typically metallic lithium. The positive electrode 54 includes electrode particles such as particles 60 possibly coated in a catalyst material (such as Au or Pt) and suspended in a porous, electrically conductive matrix 62. An electrolyte solution 64 containing a salt such as LiPF₆ dissolved in an organic solvent such as dimethyl ether or CH₃CN permeates both the porous separator 56 and the positive electrode 54. The LiPF₆ provides the electrolyte with an adequate conductivity which reduces the internal electrical resistance of the cell 50 to allow a high power.

A portion of the positive electrode 52 is enclosed by a barrier 66. The barrier 66 in FIG. 3 is configured to allow oxygen from an external source 68 to enter the positive electrode 54 while filtering undesired components such as gases and fluids. The wetting properties of the positive electrode 54 prevent the electrolyte 64 from leaking out of the positive electrode 54. Alternatively, the removal of contaminants from an external source of oxygen, and the retention of cell components such as volatile electrolyte, may be carried out separately from the individual cells. Oxygen from the external source 68 enters the positive electrode 54 through the barrier 66 while the cell 50 discharges and oxygen exits the positive electrode 54 through the barrier 66 as the cell 50 is charged. In operation, as the cell 50 discharges, oxygen and lithium ions are believed to combine to form a discharge product Li₂O₂ or Li₂O in accordance with the following relationship:

*Li* ↔ *Li*⁺ + *e⁻* (negative electrode)

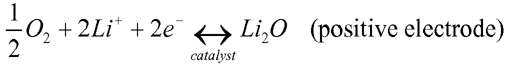

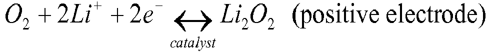

The positive electrode 54 in a typical cell 50 is a lightweight, electrically conductive material which has a porosity of greater than 80% to allow the formation and deposition/storage of Li₂O₂ in the cathode volume. The ability to deposit the Li₂O₂ directly determines the maximum capacity of the cell. In order to realize a battery system with a specific energy of 600 Wh/kg or greater, a plate with a thickness of 100 µm must have a capacity of about 20 mAh/cm².

Materials which provide the needed porosity include carbon black, graphite, carbon fibers, carbon nanotubes, and other non-carbon materials. There is evidence that each of these carbon structures undergo an oxidation process during charging of the cell, due at least in part to the harsh environment in the cell (pure oxygen, superoxide and peroxide ions, formation of solid lithium peroxide on the cathode surface, and electrochemical oxidation potentials of >3V (vs. Li/Li⁺)).

While there is a clear benefit to couples that include oxygen as a positive electrode and metals, alloys of metals, or other materials as a negative electrode, none of these couples has seen commercial demonstration thus far because of various challenges. A number of investigations into the problems associated with Li-oxygen batteries have been conducted as reported, for example, by Beattie, S., D. Manolescu, and S. Blair, "High-Capacity Lithium-Air Cathodes," Journal of the Electrochemical Society, 2009. 156: p. A44, Kumar, B., et al., "A Solid-State, Rechargeable, Long Cycle Life Lithium-Air Battery, "Journal of the Electrochemical Society, 2010. 157: p. A50, Read, J., "Characterization of the lithium/oxygen organic electrolyte battery," Journal of the Electrochemical Society, 2002. 149: p. A1190, Read, J., et al., "Oxygen transport properties of organic electrolytes and performance of lithium/oxygen battery," Journal of the Electrochemical Society, 2003. 150: p. A1351, Yang, X. and Y. Xia, "The effect of oxygen pressures on the electrochemical profile of lithium/oxygen battery," Journal of Solid State Electrochemistry: p. 1-6, and Ogasawara, T., et al., "Rechargeable Li2O2 Electrode for Lithium Batteries," Journal of the American Chemical Society, 2006. 128(4): p. 1390-1393. Further battery assemblies are known from documents US 2012/0041628 A1 and US 2005/0095488 A1.

While some issues have been investigated, several challenges remain to be addressed for lithium-oxygen batteries. These challenges include limiting dendrite formation at the lithium metal surface, protecting the lithium metal (and possibly other materials) from moisture and other potentially harmful components of air (if the oxygen is obtained from the air), designing a system that achieves acceptable specific energy and specific power levels, reducing the hysteresis between the charge and discharge voltages (which limits the round-trip energy efficiency), and improving the number of cycles over which the system can be cycled reversibly.

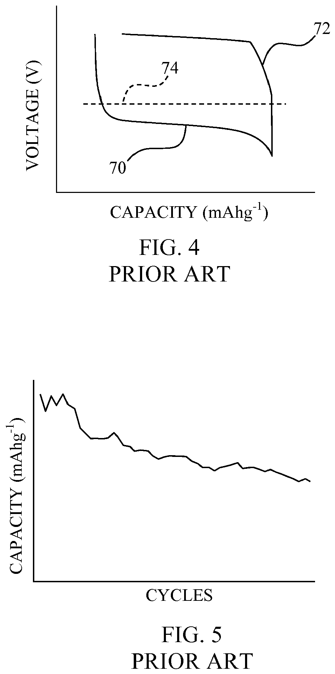

The limit of round trip efficiency occurs due to an apparent voltage hysteresis as depicted in FIG. 4. In FIG. 4, the discharge voltage 70 (approximately 2.5 to 3 V vs. Li/Li⁺) is much lower than the charge voltage 72 (approximately 4 to 4.5 V vs. Li/Li⁺). The equilibrium voltage 74 (or open-circuit potential) of the lithium/oxygen system is approximately 3 V. Hence, the voltage hysteresis is not only large, but also very asymmetric.

The large over-potential during charge may be due to a number of causes. For example, reaction between the Li₂O₂ and the conducting matrix 62 may form an insulating film between the two materials. Additionally, there may be poor contact between the solid discharge products Li₂O₂ or Li₂O and the electronically conducting matrix 62 of the positive electrode 54. Poor contact may result from oxidation of the discharge product directly adjacent to the conducting matrix 62 during charge, leaving a gap between the solid discharge product and the matrix 52.

Another mechanism resulting in poor contact between the solid discharge product and the matrix 62 is complete disconnection of the solid discharge product from the conducting matrix 62. Complete disconnection of the solid discharge product from the conducting matrix 62 may result from fracturing, flaking, or movement of solid discharge product particles due to mechanical stresses that are generated during charge/discharge of the cell. Complete disconnection may contribute to the capacity decay observed for most lithium/oxygen cells. By way of example, FIG. 5 depicts the discharge capacity of a typical Li/oxygen cell over a period of charge/discharge cycles.

Other physical processes which cause voltage drops within an electrochemical cell, and thereby lower energy efficiency and power output, include mass-transfer limitations at high current densities. The transport properties of aqueous electrolytes are typically better than nonaqueous electrolytes, but in each case mass-transport effects can limit the thickness of the various regions within the cell, including the cathode. Reactions among O₂ and other metals may also be carried out in various media.

In systems using oxygen as a reactant, the oxygen may either be carried on board the system or obtained from the atmosphere. There are both advantages and disadvantages to operating a battery that reacts gaseous oxygen in a closed format by use of a tank or other enclosure for the oxygen. One advantage is that if the reaction chemistry is sensitive to any of the other components of air (e.g., H₂O, CO₂), only pure oxygen can be added to the enclosure so that such contaminants are not present. Other advantages are that the use of an enclosure can allow for the operation at a high partial pressure of oxygen at the site of the reaction (for uncompressed atmospheric air the pressure of oxygen is only 0.21 bar), can prevent any volatile species from the leaving the system (i.e., prevent "dry out"), and other advantages. The disadvantages include the need to carry the oxygen at all times, increasing the system mass and volume, potential safety issues associated with high-pressure oxygen, and others.

Moreover, because the pressure of a fixed number of moles of gas within a fixed volume is (assuming ideal gas behavior, which is within 10% of the real behavior of oxygen gas at pressures up to 350 bar), proportional to the temperature, in a vehicle that undergoes a significant change in ambient temperature the pressure could change significantly. In particular, the range of ambient temperatures typically required for automotive operation ranges from -40 to +50° C, which for an ideal gas corresponds to a pressure difference of about 25% for a fixed number of moles and tank volume. For a vehicle on a black surface on a hot summer day the temperature may spike even higher, perhaps to as high as 85° C, resulting in even more pressure change. Even over a more limited temperature range a pressure variation of 10% is quite possible.

In some advanced vehicle propulsion technologies, such as proton-exchange membrane fuel cells, a tank filled with a gas is used. In a proton-exchange membrane fuel cell hydrogen gas is stored in a tank that may be designed for operation at a variety of pressures. However, in the case of a proton-exchange membrane fuel cell, the contents of the H₂ tank can be vented in instances where the pressure rises due to a rise in the temperature of the tank, because the tank system is designed for refilling with the H₂ fuel (as in filling a standard car with gasoline or diesel).

Unlike in the case of a proton-exchange membrane fuel cell, periodically fueling a battery which includes O₂ as a reactant with oxygen is not desired. Rather, the oxygen will be added to the system initially and then the system fully sealed from the atmosphere. However, creating a completely closed system means that venting is not possible, such that the tank must be designed for the maximum pressure that it could ever possibly reach.

What is therefore needed is an economic, efficient, and safe method to operate a battery system including a tank or other enclosure that is principally closed from the atmosphere such that, when the ambient temperature around the tank or other enclosure rises significantly, the tank or other enclosure remains safe. A system which reduces the eight, size and expense of known tanks while maintaining safety over a range of ambient temperature is also desired.

### Summary

The invention provides a vehicular battery system as recited in claim 1 and a method of operating a vehicular battery system as recited in claim 8. Preferred embodiments are laid out in the dependent claims. A vehicular battery system includes an oxygen reservoir supported by a vehicle, a vehicular battery system stack operably connected to the oxygen reservoir and a multistage compressor, the vehicular battery system stack including an active material which consumes oxygen from the oxygen reservoir during discharge, at least one sensor configured to generate a pressure signal associated with a pressure in the oxygen
reservoir, a memory, and a processor operably connected to the memory and the at least one sensor, the processor configured to execute program instructions stored within the memory to obtain the pressure signal, and control the state of charge of the vehicular battery system stack based upon the obtained pressure signal.

In accordance with another embodiment, a method of operating a vehicular battery system includes supporting an oxygen reservoir with a vehicle, operably connecting a vehicular battery system stack to the oxygen reservoir and a multistage compressor, the vehicular battery system including an active material which consumes oxygen from the oxygen reservoir during discharge, generating a pressure signal associated with a pressure in the oxygen reservoir; and controlling the state of charge of the vehicular battery system stack with a processor based upon the obtained pressure signal.

### Brief Description of Drawings

The above-described features and advantages, as well as others, should become more readily apparent to those of ordinary skill in the art by reference to the following detailed description and the accompanying figures in which:
FIG. 1 depicts a plot showing the relationship between battery weight and vehicular range for various specific energies;
FIG. 2 depicts a chart of the specific energy and energy density of various lithium-based cells;
FIG. 3 depicts a prior art lithium-oxygen (Li/oxygen) cell including two electrodes, a separator, and an electrolyte;
FIG. 4 depicts a discharge and charge curve for a typical Li/oxygen electrochemical cell;
FIG. 5 depicts a plot showing decay of the discharge capacity for a typical Li/oxygen electrochemical cell over a number of cycles;
FIG. 6 depicts a schematic view of a vehicle with an adiabatic compressor operably connected to a reservoir configured to exchange oxygen with a positive electrode for a reversible reaction with lithium;
FIG. 7 depicts a chart showing the increase in temperature when a gas is adiabatically compressed starting from a pressure of 1 bar and a temperature of 298.15 K with constant gas properties (i.e., gamma) assumed;
FIG. 8 depicts a chart showing compression work for an ideal gas (diatomic and constant properties are assumed for adiabatic) as a function of pressure with the initial pressure at one bar;
FIG. 9 depicts a process for how the pressure of the oxygen storage tank is used by the battery control system to control venting of the oxygen storage tank;
FIG. 10 depicts a process showing how the pressure of the oxygen enclosure is used by the battery control system to control the state of charge of the battery system during either charge or during rest or operation.

### Detailed Description

For the purpose of promoting an understanding of the principles of the disclosure, reference will now be made to the embodiments illustrated in the drawings and described in the following written specification. It is understood that no limitation to the scope of the disclosure is thereby intended. It is further understood that this disclosure includes any alterations and modifications to the illustrated embodiments and includes further applications of the principles of the disclosure as would normally occur to one skilled in the art to which this disclosure pertains.

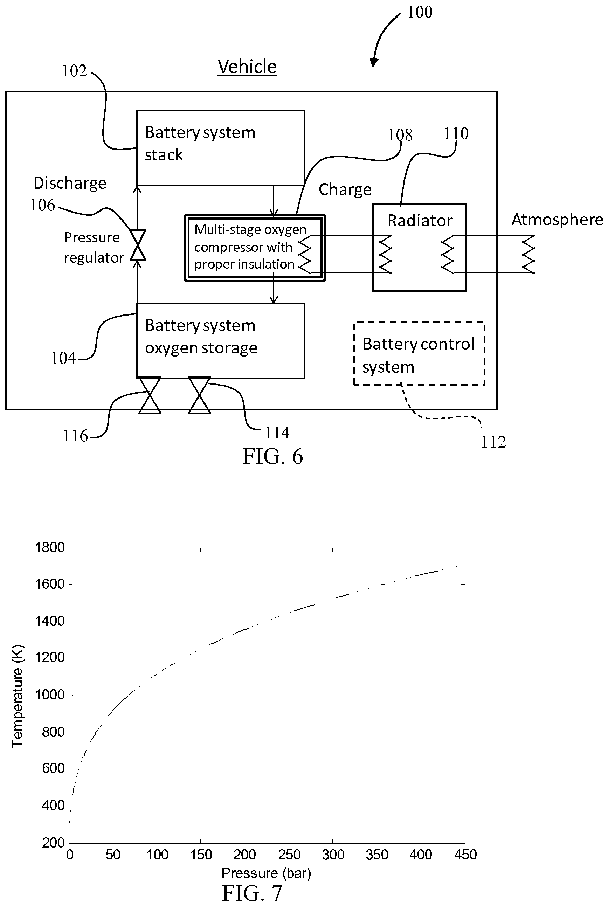

A schematic of vehicle 100 is shown in FIG. 6. The vehicle 100 includes a vehicular battery system stack 102 and an oxygen reservoir 104. A pressure regulator 106 governs provision of oxygen to the vehicular battery system stack 102 during discharge while a multi-stage oxygen compressor 108 is used to return oxygen to the oxygen reservoir 104 during charging operations.

The vehicular battery system stack 102 includes one or more negative electrodes (not shown) separated from one or more positive electrodes (not shown)by one or more porous separators (not shown). The negative electrode (not shown) may be formed from lithium metal or a lithium-insertion compound (e.g., graphite, silicon, tin, LiAl, LiMg, Li₄Ti₅O₁₂), although Li metal affords the highest specific energy on a cell level compared to other candidate negative electrodes. Other metals may also be used to form the negative electrode, such as Zn, Mg, Na, Fe, Al, Ca, Si, and other materials that can react reversibly and electrochemically.

The positive electrode (not shown) in one embodiment includes a current collector (not shown)and electrode particles (not shown), optionally covered in a catalyst material, suspended in a porous matrix (not shown). The porous matrix (not shown)is an electrically conductive matrix formed from a conductive material such as conductive carbon or a nickel foam, although various alternative matrix structures and materials may be used. The separator (not shown) prevents the negative electrode (not shown)from electrically connecting with the positive electrode (not shown).

The vehicular battery system stack 102 includes an electrolyte solution (not shown) present in the positive electrode (not shown) and in some embodiments in the separator (not shown). In some embodiments, the electrolyte solution includes a salt, LiPF₆ (lithium hexafluorophosphate), dissolved in an organic solvent mixture. The organic solvent mixture may be any desired solvent. In certain embodiments, the solvent may be dimethyl ether (DME), acetonitrile (MeCN), ethylene carbonate, or diethyl carbonate.

In the case in which the metal is Li, the vehicular battery system stack 102 discharges with lithium metal in the negative electrode ionizing into a Li⁺ ion with a free electron e⁻. Li⁺ ions travel through the separator toward the positive electrode. Oxygen is supplied from the oxygen storage tank 104 through the pressure regulator. Free electrons e⁻ flow into the positive electrode (not shown).

The oxygen atoms and Li⁺ ions within the positive electrode form a discharge product inside the positive electrode, aided by the optional catalyst material on the electrode particles. As seen in the following equations, during the discharge process metallic lithium is ionized, combining with oxygen and free electrons to form Li₂O₂ or Li₂O discharge product that may coat the surfaces of the carbon particles.

*Li → Li*⁺ + e⁻ (negative electrode)

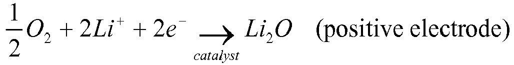

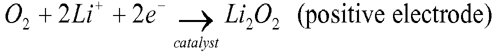

The vehicular battery system stack 102 does not use air as an external source for oxygen. External sources, such as the atmosphere, include undesired gases and contaminants. Thus, while the oxygen that reacts electrochemically with the metal in a metal/oxygen battery may come from the air, the presence of CO₂ and H₂O in air make it an unsuitable source for some of the media in which the metal/oxygen reactions are carried out and for some of the products that form. For example, in the reaction of Li with oxygen in which Li₂O₂ is formed, H₂O and CO₂ can react with the Li₂O₂ to form LiOH and/or Li₂CO₃, which can deleteriously affect the performance and rechargeability of the battery. As another example, in a basic medium CO₂ can react and form carbonates that precipitate out of solution and cause electrode clogging.

In FIG. 6, all of the components are stored on board the vehicle 100. In the embodiment of FIG. 6, the oxygen storage reservoir 104 is separated from the vehicular battery system stack 102 where the reactions take place, but in other embodiments the oxygen storage is more closely integrated with the stack (for example, incorporated within the cells). In the embodiment of FIG. 6, the oxygen storage is done in a tank or other enclosure that is spatially separated from the stack or cells where the reactions are carried out such that a minimal amount of high-pressure housing is required for the vehicle 100.

During discharge (in which oxygen is consumed), the pressure of the oxygen gas is reduced by passing it through the pressure regulator 106 such that the pressure of the oxygen that reaches the stack is close to ambient (i.e., less than about 5 bar). During discharge the compressor 108 does not operate. During charge the compressor 108 is operated to compress the oxygen that is being generated within the stack or cells where the reactions are taking place.

The compressor 108 in various embodiments is of a different type. In one embodiment which is suitable and mature for a vehicle application in which it is desired to pressurize a gas to more than 100 bar in a unit with a compact size is a multi-stage rotary compressor. When embodied as a multi-stage rotary compressor, each compression step is nearly adiabatic because it involves the rapid action of a piston to compress the gas. Commercial units of the appropriate size are widely available at a reasonable cost; they are used for a variety of applications that require air compression.

Because each stage of the compressor is nearly adiabatic, in addition to an increase in the pressure there is also an increase in the temperature, as explained with reference to FIG. 7. FIG. 7 shows the temperature at the end of a single adiabatic compression step starting at a pressure of 1 bar and a temperature of 298.15 K assuming constant gas properties. The figure shows that it is impractical to use a single compression step to achieve a pressure of, for example, 350 bar, because the output temperature would be far too high to inject into a tank of standard materials, which in turn is integrated in a vehicle that may have heat-sensitive components. In addition, the final pressure shown in FIG. 7 is for the temperature at the end of the compression step; thus, after cooling, the pressure will fall. It is important for the temperature of the compressed gas released into the tank to be within a certain range so that it is compatible with the tank material, which in different embodiments is a metal such as aluminum or a polymer, depending on the type of tank.

In order to prevent the temperature from rising too high it is necessary to cool the gas at the end of each adiabatic compression step. This is accomplished using the radiator 110 shown in FIG. 6. The radiator 110 in some embodiments is the same radiator that is used to cool the battery system stack; in such embodiments the heat exchange loop also extends into the other components of the battery system such as the vehicular battery system stack 102 and battery system oxygen storage 104. Typically, fluid is passed through the oxygen compressor 108, removing heat from the oxygen gas after each compression step and bringing the temperature towards that of the radiator fluid. The fluid is passed through the radiator 110 where heat is exchanged with the atmosphere. The compressor is also insulated to prevent the exposure of other parts of the battery system or the vehicle 100 to high temperatures.

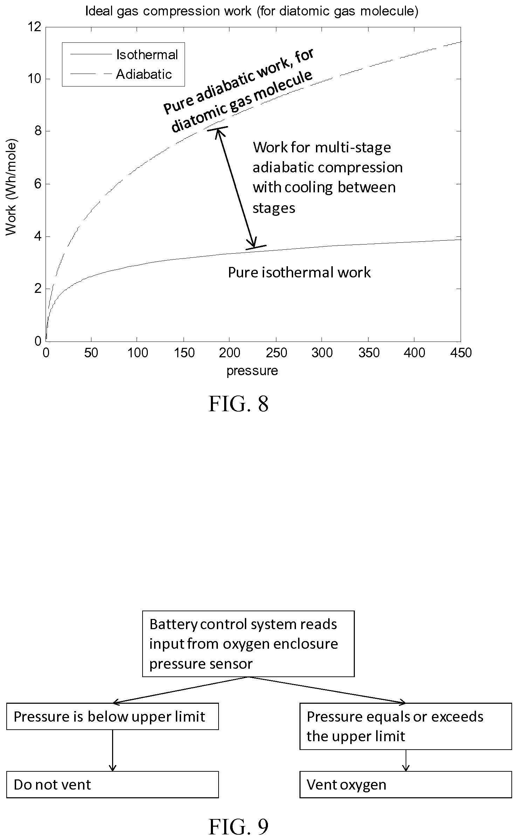

The cooling of the oxygen after each compression step allows the system to operate closer to the isothermal compression work line shown in FIG. 8. In particular, FIG. 8 shows the difference in the work required for a single-stage adiabatic compression (assuming a diatomic gas and constant properties) compared to the compression work required for isothermal compression. As the figure shows, significantly more work is required for adiabatic compression than isothermal compression. For a multi-stage adiabatic compression process with cooling between stages the amount of work required is between the pure isothermal and single-stage adiabatic lines. Thus, the amount of work required for the compression can be lowered compared to adiabatic compression by using multiple compression stages with cooling of the gas at the end of each compression.

The magnitude of the compression energy compared to the reaction energy also depends on the negative electrode material with which oxygen is reacting. For example, if the oxygen is reacting with Li to form Li₂O₂ on discharge, the reaction energy is 159 Wh/mole O₂. Thus, if the charging process takes place with 85% efficiency, about 24 Wh/mole O₂ would be required for cooling for the reaction, suggesting that the amount of cooling required for the compression should be smaller than that required for cooling the stack or cells.

In the embodiment of FIG. 6, all processes associated with the operation of the battery system are controlled by a battery control system 112. The battery control system 112 controls the flow rate of the fluid that is passed through the radiator 110 and the oxygen compressor 108 and possibly other components on the vehicle 100. The battery control system 112 includes a memory (not shown) in which program instructions are stored and a processor (not shown) which executes the program instructions to control the temperature of the oxygen which is compressed into the storage system 104. The processor is operatively connected to temperature sensors (not shown) in the vehicular battery system stack 102, the oxygen storage tank 104, the radiator 110, an ambient temperature sensor (not shown) and at various stages in the compressor 108 in order to more precisely control the system. In some embodiments, more or fewer temperature sensors are included. A pressure sensor which is operably connected to the processor is also provided in the oxygen storage tank 104. The battery control system 112 also controls a safety vent 114 which, along with a refill port 116, is provided on the oxygen storage tank 104.

When the system is fully charged the pressure of oxygen in the oxygen storage tank 104 is at its highest value. As an ultimate protection against rupture of the tank in case the temperature of the compressed oxygen rises significantly the oxygen is be vented from the system to the atmosphere through the safety vent 114. As depicted in FIG. 9, The battery control system 112 continually reads input from the pressure sensor in the oxygen storage tank 104 and, if the pressure equals or exceeds the maximum pressure specified for the safety of the oxygen storage tank 104, the pressure relief valve 114 is activated and oxygen is released to the atmosphere. In embodiments wherein the pressure is controlled actively, the pressure at which the vent 114 is closed may be significantly below the safety pressure or equal to the safety pressure. In the latter case multiple releases may be made if the temperature continues to rise. A passive pressure release valve is used in some embodiments, but in the most desirable embodiments the activation of the pressure release valve 114 does not result in permanently opening the oxygen enclosure to the atmosphere so that the pressure and gas composition within the oxygen enclosure eventually reaches that of ambient air. Instead, it is preferred that whether the pressure release valve 114 is triggered via the battery control system 112 or via a passive mechanism, the valve 114 will release only a specified quantity of oxygen that will return the system to a safe regime and then close.

If the pressure release valve 114 is triggered and some oxygen is released from the oxygen storage tank 104, the oxygen can be replenished. This will typically be done in special location, such as a vehicle dealership, that has access to highly purified oxygen. The replenishment of the oxygen could be done at any state of charge of the battery system, but when the system is fully or partly discharged the amount of oxygen in the battery system will be lower than when the system is fully charged, and therefore it is preferable to replenishment oxygen at lower states of charge. The battery control system 112 is configured to determine the present state of charge of the vehicular battery system stack 102 in any desired manner. Additionally, the specifications of the battery are stored within the memory (for example, the battery capacity, in units of Ah), so that the correct amount of oxygen can be added to the system. By knowing the state of charge and the battery's capacity, the amount of oxygen that was vented can be calculated, and the desired replacement amount determined.

While a pressure relief valve 114 will always be required that ensures the safety of the oxygen enclosure in case there is a failure in another system, the preferred method to handle a rise in the pressure of the oxygen enclosure is not to vent oxygen gas, but rather to adjust the state of charge of the battery system. In particular, when the battery is fully charged, all of the oxygen in the battery system should be contained in the oxygen storage tank 104, and therefore the pressure of the oxygen storage tank 104 should be at its highest value. The oxygen storage tank 104 (e.g., its wall thickness) must be designed for the maximum pressure. As discussed previously, while the maximum pressure of the tank is essentially invariant with temperature, the pressure exerted by a given number of moles of gas within a fixed volume does depend on temperature.

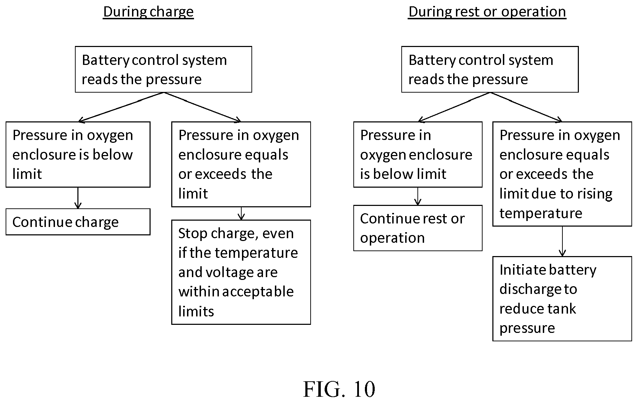

Rather than designing the battery system and, in particular, the oxygen storage tank 104 for the maximum temperature expected to be encountered, the oxygen storage tank 104 is designed for the maximum temperature that is expected to be frequently encountered, such as 35° C or even much lower values, and then the battery control system 112 limits the charge based on the pressure within the oxygen storage tank 104. A schematic of this situation is shown in FIG. 10.

With reference to FIG. 10, during charge, rather than just using inputs from the voltage and the temperature to determine whether charging can proceed, here the pressure is also used by the battery control system 112. Thus, while charging the battery system at a lower temperature, the maximum state of charge once the charging is terminated may be higher than charging at a higher temperature. FIG. 10 also shows that, during rest or operation, if the temperature rises (for example, if the vehicle 100 is charged at night and then left during a hot and sunny day on a black surface) the battery control system 112 may initiate discharge to consume some of the oxygen stored in the oxygen storage tank 104 and thereby reduce the pressure. The battery system may be discharged by connecting it to a load, such as the cooling system of the vehicle 100, a cooling system configured to cool the oxygen reservoir, or a load specially designed for this purpose. The slow rise in pressure associated with a rise in the ambient temperature means that a small load (<5 kW) would be adequate to ensure the pressure stays within the fixed limit. Thus, no venting occurs and there is no need to replenish oxygen.

The vehicular battery system stack 102 thus makes use of oxygen (which may be pure or contain additional components) stored within a battery cell or external to a cell in a tank or other volume. The oxygen reacts electrochemically with the metal (which may include Li, Zn, Mg, Na, Fe, Al, Ca, Si, and others) to produce energy on discharge, and on charge the metal is regenerated and oxygen gas (and perhaps other species, such as H₂O) are evolved.

Beneficially, the battery system in the vehicle 100 is thus a completely closed system and species present in ambient air (e.g., H₂O, CO₂, and others) that may be detrimental to the cell operation are excluded. The battery system provides electrochemical compression of oxygen on charge, and the use of compressed oxygen on discharge, to reduce energy losses associated with mechanical oxygen compression (which is typically carried out adiabatically, including in a multi-stage adiabatic process) and to reduce the cost and complexity of a mechanical compressor. The components of the battery system are configured to handle the pressure of the compressed oxygen, including flow fields, bipolar plates, electrodes, separators, and high-pressure oxygen lines.

The battery system in some embodiments includes high-pressure seals, an electrode, gas-diffusion layer, and flow field design that provide sufficient mechanical support to prevent pressure-induced fracture or bending (including with pressure cycling) that would be deleterious to cell performance and life, and a separator that is impervious to oxygen (even at high pressures, including up to 350 bar or above). The minimum pressure in some embodiments is chosen to eliminate delamination of cell components from one another. The minimum pressure in some embodiments is chosen to reduce mass transfer limitations and thereby increase the limiting current.

The above described system provides a number of advantages. For example, the system provides a lightweight, smaller, and less expensive tank, because it can be designed for a lower maximum pressure. Additionally, the system provides a vehicle with a longer driving range for a given tank size and mass, because more oxygen gas can be added to the tank during a full system charge because there are systems in place to prevent a safety problem if the temperature rises.

## Claims

1. A vehicular battery system, comprising:
an oxygen reservoir (104) supported by a vehicle;
a vehicular battery system stack (102) operably connected to the oxygen reservoir (104) and a multistage compressor (108), the vehicular battery system stack (102) including an active material which consumes oxygen from the oxygen reservoir (104) during discharge;
at least one sensor configured to generate a pressure signal associated with a pressure in the oxygen reservoir (104);
a memory; and
a processor operably connected to the memory and the at least one sensor, the processor configured to execute program instructions stored within the memory to
obtain the pressure signal, and
control the state of charge of the vehicular battery system stack (102) based upon the obtained pressure signal by connecting an electrical load to the vehicular battery system stack (102).

2. The vehicular battery system of claim 1, wherein the processor is configured to further control the state of charge of the vehicular battery system stack (102) based upon the obtained pressure signal by:
controlling a vent (114) operably connected to the oxygen reservoir (104) between a first position whereat oxygen within the oxygen reservoir (104) is not allowed to pass through the vent (114) and a second position whereat oxygen within the oxygen reservoir (104) is allowed to pass through the vent (114).

3. The vehicular battery system of claim 1, wherein the electrical load comprises a vehicle cooling system.

4. The vehicular battery system of claim 1, wherein the electrical load comprises a cooling system configured to cool the oxygen reservoir (104).

5. The vehicular battery system of claim 1, wherein the processor is further configured to:
obtain a voltage signal associated with a voltage of the vehicular battery system stack (102); and
control the state of charge of the vehicular battery system stack (102) based upon the obtained voltage signal.

6. The vehicular battery system of claim 5, wherein the processor is further configured to:
obtain a temperature signal associated with a temperature of the vehicular battery system stack (102); and
control the state of charge of the vehicular battery system stack (102) based upon the obtained temperature signal.

7. The vehicular battery system of claim 6, wherein the processor is further configured to:
control the state of charge of the vehicular battery system stack (102) by terminating a charging of the vehicular battery system stack (102).

8. A method of operating a vehicular battery system, comprising:
supporting an oxygen reservoir (104) with a vehicle;
operably connecting a vehicular battery system stack (102) to the oxygen reservoir (104) and a multistage compressor (108), the vehicular battery system including an active material which consumes oxygen from the oxygen reservoir during discharge;
generating a pressure signal associated with a pressure in the oxygen reservoir (104); and
controlling the state of charge of the vehicular battery system stack (102) with a processor based upon the obtained pressure signal by connecting an electrical load to the vehicular battery system stack (102).

9. The method of claim 8, wherein controlling the state of charge further comprises:
controlling with the processor a vent (114) operably connected to the oxygen reservoir (104) between a first position whereat oxygen within the oxygen reservoir (104) is not allowed to pass through the vent (114) and a second position whereat oxygen within the oxygen reservoir (104) is allowed to pass through the vent (114).

10. The method of claim 8, wherein connecting an electrical load comprises:
connecting a vehicle cooling system to the vehicular battery system stack (102) using the processor.

11. The method of claim 8, wherein connecting an electrical load comprises:
connecting a cooling system configured to cool the oxygen reservoir (104) to the vehicular battery system stack (102) using the processor.

12. The method of claim 8, further comprising:
obtaining with the processor a voltage signal associated with a voltage of the vehicular battery system stack (102); and
controlling the state of charge of the vehicular battery system stack (102) with the processor based upon the obtained voltage signal.

13. The method of claim 12, further comprising:
obtaining with the processor a temperature signal associated with a temperature of the vehicular battery system stack (102); and
controlling the state of charge of the vehicular battery system stack (102) with the processor based upon the obtained temperature signal.

14. The method of claim 13, wherein controlling the state of charge of the vehicular battery system stack comprises:
terminating a charging of the vehicular battery system stack (102).

## Patentansprüche

1. Fahrzeugbatteriesystem, umfassend:
einen Sauerstoffspeicher (104), getragen von einem Fahrzeug;
einen Fahrzeugbatteriesystem-Stapel (102), der in Wirkbeziehung mit dem Sauerstoffspeicher (104) und einem Mehrstufenkompressor (108) verbunden ist, wobei der Fahrzeugbatteriesystem-Stapel (102) ein aktives Material enthält, das während des Entladens Sauerstoff aus dem Sauerstoffspeicher (104) verbraucht;
mindestens einen Sensor, der ausgelegt ist, ein Drucksignal zu erzeugen, das mit einem Druck in dem Sauerstoffspeicher (104) in Verbindung steht;
einen Speicher; und
einen Prozessor, der in Wirkbeziehung mit dem Speicher und dem mindestens einen Sensor verbunden ist, wobei der Prozessor ausgelegt ist, Programmanweisungen auszuführen, die in dem Speicher gespeichert sind, um das Drucksignal zu erhalten, und
den Ladezustand des Fahrzeugbatteriesystem-Stapels (102) anhand des erhaltenen Drucksignals durch Anschließen einer elektrischen Last an den Fahrzeugbatteriesystem-Stapel (102) zu steuern.

2. Fahrzeugbatteriesystem nach Anspruch 1, wobei der Prozessor ausgelegt ist, ferner den Ladezustand des Fahrzeugbatteriesystem-Stapels (102) anhand des erhaltenen Drucksignals zu steuern durch:
Steuern einer Entlüftungsöffnung (114), die in Wirkbeziehung mit dem Sauerstoffspeicher (104) verbunden ist, zwischen einer ersten Position, bei der Sauerstoff in dem Sauerstoffspeicher (104) nicht durch die Entgasungsöffnung (114) gelangen darf, und einer zweiten Position, bei der Sauerstoff in dem Sauerstoffspeicher (104) durch die Entgasungsöffnung (114) gelangen darf.

3. Fahrzeugbatteriesystem nach Anspruch 1, wobei die elektrische Last ein Fahrzeugkühlsystem umfasst.

4. Fahrzeugbatteriesystem nach Anspruch 1, wobei die elektrische Last ein Kühlsystem umfasst, das zum Kühlen des Sauerstoffspeichers (104) ausgelegt ist.

5. Fahrzeugbatteriesystem nach Anspruch 1, wobei der Prozessor ferner ausgelegt ist:
ein Spannungssignal zu erhalten, das mit einer Spannung des Fahrzeugbatteriesystem-Stapels (102) in Verbindung steht; und
den Ladezustand des Fahrzeugbatteriesystem-Stapels (102) anhand des erhaltenen Spannungssignals zu steuern.

6. Fahrzeugbatteriesystem nach Anspruch 5, wobei der Prozessor ferner ausgelegt ist:
ein Temperatursignal zu erhalten, das mit einer Temperatur des Fahrzeugbatteriesystem-Stapels (102) in Verbindung steht; und
den Ladezustand des Fahrzeugbatteriesystem-Stapels (102) anhand des erhaltenen Temperatursignals zu steuern.

7. Fahrzeugbatteriesystem nach Anspruch 6, wobei der Prozessor ferner ausgelegt ist:
den Ladezustand des Fahrzeugbatteriesystem-Stapels (102) durch Beenden eines Ladevorgangs des Fahrzeugbatteriesystem-Stapels (102) zu steuern.

8. Verfahren zum Betreiben eines Fahrzeugbatteriesystems, umfassend:
Tragen eines Sauerstoffspeichers (104) von einem Fahrzeug;
in Wirkbeziehung Verbinden eines Fahrzeugbatteriesystem-Stapels (102) mit dem Sauerstoffspeicher (104) und einem Mehrstufenkompressor (108), wobei das Fahrzeugbatteriesystem ein aktives Material enthält, das während des Entladens Sauerstoff aus dem Sauerstoffspeicher verbraucht;
Erzeugen eines Drucksignals, das mit einem Druck in dem Sauerstoffspeicher (104) in Verbindung steht; und
Steuern des Ladezustands des Fahrzeugbatteriesystem-Stapels (102) mit einem Prozessor anhand des erhaltenen Drucksignals durch Anschließen einer elektrischen Last an den Fahrzeugbatteriesystem-Stapel (102).

9. Verfahren nach Anspruch 8, wobei das Steuern des Ladezustands ferner umfasst:
Steuern, mit dem Prozessor, einer Entgasungsöffnung (114), die in Wirkbeziehung mit dem Sauerstoffspeicher (104) verbunden ist, zwischen einer ersten Position, bei der Sauerstoff in dem Sauerstoffspeicher (104) nicht durch die Entgasungsöffnung (114) gelangen darf,
und einer zweiten Position, bei der Sauerstoff in dem Sauerstoffspeicher (104) durch die Entgasungsöffnung (114) gelangen darf.

10. Verfahren nach Anspruch 8, wobei das Anschließen einer elektrischen Last umfasst: Anschließen eines Fahrzeugkühlsystems an den Fahrzeugbatteriesystem-Stapel (102) mittels des Prozessors.

11. Verfahren nach Anspruch 8, wobei das Anschließen einer elektrischen Last umfasst: Anschließen eines Kühlsystems, das ausgelegt ist, den Sauerstoffspeicher (104) zu kühlen, an den Fahrzeugbatteriesystem-Stapel (102) mittels des Prozessors.

12. Verfahren nach Anspruch 8, ferner umfassend:
Erhalten, mit dem Prozessor, eines Spannungssignals, das mit einer Spannung des Fahrzeugbatteriesystem-Stapels (102) in Verbindung steht; und
Steuern des Ladezustands des Fahrzeugbatteriesystem-Stapels (102) mit dem Prozessor anhand des erhaltenen Spannungssignals.

13. Verfahren nach Anspruch 12, ferner umfassend:
Erhalten, mit dem Prozessor, eines Temperatursignals, das mit einer Temperatur des Fahrzeugbatteriesystem-Stapels (102) in Verbindung steht; und
Steuern des Ladezustands des Fahrzeugbatteriesystem-Stapels (102) mit dem Prozessor anhand des erhaltenen Temperatursignals.

14. Verfahren nach Anspruch 13, wobei das Steuern des Ladezustands des Fahrzeugbatteriesystem-Stapels umfasst:
Beenden eines Ladevorgangs des Fahrzeugbatteriesystem-Stapels (102).

## Revendications

1. Système de batterie de véhicule, comprenant :
un réservoir d'oxygène (104) supportée par un véhicule ;
une pile de système de batterie de véhicule (102) raccordée de manière fonctionnelle au réservoir d'oxygène (104) et à un compresseur à plusieurs étages (108), la pile de système de batterie de véhicule (102) comprenant un matériau actif qui consomme de l'oxygène provenant du réservoir d'oxygène (104) pendant une décharge ;
au moins un capteur configuré pour générer un signal de pression associé à une pression à l'intérieur du réservoir d'oxygène (104) ;
une mémoire ; et
un processeur raccordé de manière fonctionnelle à la mémoire et à l'au moins un capteur, le processeur étant configuré pour exécuter des instructions de programme stockées dans la mémoire, de façon
à obtenir le signal de pression, et
à commander l'état de charge de la pile de système de batterie de véhicule (102) en se basant sur le signal de pression obtenu en raccordant une charge électrique à la pile de système de batterie de véhicule (102).

2. Système de batterie de véhicule selon la revendication 1, dans lequel le processeur est configuré pour réguler en outre l'état de charge de la pile de système de batterie de véhicule (102) en se basant sur le signal de pression obtenu :
en commandant un évent (114) raccordé de manière fonctionnelle au réservoir d'oxygène (104) entre une première position dans laquelle l'oxygène dans le réservoir d'oxygène (104) ne peut pas passer à travers l'évent (114), et une seconde position dans laquelle l'oxygène dans le réservoir d'oxygène (104) peut passer à travers l'évent (114).

3. Système de batterie de véhicule selon la revendication 1, dans lequel la charge électrique comprend un système de refroidissement de véhicule.

4. Système de batterie de véhicule selon la revendication 1, dans lequel la charge électrique comprend un système de refroidissement configuré pour refroidir le réservoir d'oxygène (104).

5. Système de batterie de véhicule selon la revendication 1, dans lequel le processeur est en outre configuré pour :
obtenir un signal de tension associé à une tension de la pile de système de batterie de véhicule (102) ; et
réguler l'état de charge de la pile de système de batterie de véhicule (102) en se basant sur le signal de tension obtenu.

6. Système de batterie de véhicule selon la revendication 5, dans lequel le processeur est en outre configuré pour :
obtenir un signal de température associé à une température de la pile de système de batterie de véhicule (102) ; et
réguler l'état de charge de la pile de système de batterie de véhicule (102) en se basant sur le signal de température obtenu.

7. Système de batterie de véhicule selon la revendication 6, dans lequel le processeur est en outre configuré pour :
réguler l'état de charge de la pile de système de batterie de véhicule (102) en terminant une charge de la pile de système de batterie de véhicule (102).

8. Procédé de fonctionnement d'un système de batterie de véhicule, consistant à :
supporter un réservoir d'oxygène (104) avec un véhicule ;
raccorder de manière fonctionnelle une pile de système de batterie de véhicule (102) au réservoir d'oxygène (104) et à un compresseur à plusieurs étages (108), le système de batterie de véhicule comprenant un matériau actif qui consomme de l'oxygène provenant du réservoir d'oxygène pendant une décharge ;
générer un signal de pression associé à une pression dans le réservoir d'oxygène (104) ; et
réguler l'état de charge de la pile de système de batterie de véhicule (102) avec un processeur en se basant sur le signal de pression obtenu en raccordant une charge électrique à la pile de système de batterie de véhicule (102).

9. Procédé selon la revendication 8, dans lequel la régulation de l'état de charge consiste en outre à :
commander, avec le processeur, un évent (114) raccordé de manière fonctionnelle au réservoir d'oxygène (104) entre une première position dans laquelle l'oxygène dans le réservoir d'oxygène (104) ne peut pas passer à travers l'évent (114), et une seconde position dans laquelle l'oxygène dans le réservoir d'oxygène (104) peut passer à travers l'évent (114).

10. Procédé selon la revendication 8, dans lequel le raccordement d'une charge électrique consiste à :
raccorder un système de refroidissement de véhicule à la pile de système de batterie de véhicule (102) à l'aide du processeur.

11. Procédé selon la revendication 8, dans lequel le raccordement d'une charge électrique consiste à :
raccorder un système de refroidissement configuré pour refroidir le réservoir d'oxygène (104) à la pile de système de batterie de véhicule (102) à l'aide du processeur.

12. Procédé selon la revendication 8, consistant en outre à :
obtenir, avec le processeur, un signal de tension associé à une tension de la pile de système de batterie de véhicule (102) ; et
réguler l'état de charge de la pile de système de batterie de véhicule (102) avec le processeur en se basant sur le signal de tension obtenu.

13. Procédé selon la revendication 12, consistant en outre à :
obtenir, avec le processeur, un signal de température associé à une température de la pile de système de batterie de véhicule (102) ; et
réguler l'état de charge de la pile de système de batterie de véhicule (102) avec le processeur en se basant sur le signal de température obtenu.

14. Procédé selon la revendication 13, dans lequel la régulation de l'état de charge de la pile de système de batterie de véhicule consiste à :
terminer une charge de la pile de système de batterie de véhicule (102).
